# EUROPEAN PATENT APPLICATION

(11) **EP 4 765 445 A1**
(43) Date of publication of application: **24.06.2026**
(21) Application number: 25857234.6
(22) Date of filing: 31.07.2025
(51) Int. Cl.: H01M 50/531, H01M 50/533, H01M 50/54, B23K 26/21, B23K 20/10, H01M 50/593, H01M 50/588, H01M 10/04, H01M 10/058

(54) **METHOD FOR MANUFACTURING SECONDARY BATTERY, SECONDARY BATTERY, AND BATTERY MODULE, BATTERY PACK AND TRANSPORTATION MEANS COMPRISING SAME**

(30) Priority: 19.08.2024 KR 20240110340; 17.01.2025 KR 20250007367; 30.07.2025 KR 20250103767
(71) Applicant: LG Energy Solution, Ltd., Seoul 07335 (KR)
(72) Inventor: LEE, Hyun Hee, Daejeon 34122 (KR); DO, Jin Uk, Daejeon 34122 (KR); PARK, Jin Sub, Daejeon 34122 (KR)
(74) Representative: Goddar, Heinz J.
(86) International application number: PCT/KR2025/011415
(87) International publication number: WO 2026/043148

(57) **Abstract**

The present disclosure relates to a method of manufacturing a secondary battery, a secondary battery, a battery module including the same, a battery pack, and a vehicle. A current collector according to the present disclosure includes a slit portion in which a plurality of slits are formed in a thickness direction of an electrode assembly, and a connection portion connected to one side of the slit portion and including a support portion and a current collecting protrusion. The present disclosure may minimize wasted space in a secondary battery casing when welding a large number of foil tabs and a current collector, reduce the production cost, and enable the current collector and an electrode terminal to be easily coupled.

## Description

### Technical Field

The present disclosure relates to a method of manufacturing a secondary battery, a secondary battery, a battery module including the same, a battery pack, and a vehicle, and more particularly, to a current collector including a slit portion having a plurality of slits extending in a longitudinal direction of an electrode assembly, and a connection portion connected to one side of the slit portion and including a support portion and a current collecting protrusion, a secondary battery including the same, and a method of manufacturing the secondary battery.

### Background Art

Recently, as the demand for portable electronic devices has rapidly increased and the development of electric vehicles, energy storage batteries, robots, satellites, and the like has become more active, intensive research has been conducted on high-performance secondary batteries capable of repeated charging and discharging.

Secondary batteries may be classified, according to the shape of a battery casing, into a can-type secondary battery, in which an electrode assembly is embedded in a metal can, and a pouch-type secondary battery, in which an electrode assembly is embedded in a pouch formed of an aluminum laminate sheet. The can-type secondary battery may also be classified into a cylindrical secondary battery and a prismatic secondary battery according to the shape of the metal can.

In a secondary battery, foil tabs of an electrode assembly and a current collector are connected to each other by welding. When welding the foil tabs and the current collector, a plurality of foil tabs are bent and laid down to increase a contact area between the foil tabs and the current collector, and the current collector is seated on an upper side of the foil tabs and welded thereto.

However, in order to bend the plurality of foil tabs, lengths of the foil tabs need to be increased, and a space for bending the foil tabs is required, which causes a problem of reduced energy density of the secondary battery.

Accordingly, there is a need to develop a secondary battery capable of increasing energy density of the secondary battery by reducing the space for bending the foil tabs and allowing the lengths of the foil tabs to be shortened.

### DISCLOSURE

### Technical Problem

The present disclosure is directed to providing a method of manufacturing a secondary battery, a secondary battery, a battery module including the same, a battery pack, and a vehicle, which may prevent an electrode assembly from being affected when welding foil tabs and a current collector.

The present disclosure is directed to providing a method of manufacturing a secondary battery, a secondary battery, a battery module including the same, a battery pack, and a vehicle, which may minimize wasted space in a secondary battery casing when welding a large number of foil tabs and the current collector, and may reduce the production cost.

The present disclosure is directed to providing a method of manufacturing a secondary battery, a secondary battery, a battery module including the same, a battery pack, and a vehicle, in which coupling of a current collector and an electrode terminal may be facilitated.

### Technical Solution

A secondary battery according to an aspect of the present disclosure may include an electrode assembly and a current collector. The electrode assembly may include an electrode portion, and a plurality of foil tabs formed on one end of the electrode portion. The current collector may include a slit portion formed with a plurality of slits extending in a longitudinal direction of the electrode assembly, and a connection portion connected to one side of the slit portion and provided with a support portion and a current collecting protrusion. The current collector may be disposed on an upper side of the electrode portion and welded to the plurality of foil tabs. The plurality of foil tabs may be grouped into at least two foil tab groups, and the foil tab groups may pass through the respective slits of the current collector.

According to an aspect of the present disclosure, each of the plurality of foil tab groups may be primarily welded.

According to an aspect of the present disclosure, the plurality of foil tab groups protruding upward from the slits of the current collector may each be bent toward an upper surface of the current collector.

According to an aspect of the present disclosure, each of the foil tab groups may include at least five foil tabs.

According to an aspect of the present disclosure, in the current collector, a thickness of the connection portion may be identical to a thickness of the slit portion.

According to an aspect of the present disclosure, in the current collector, a thickness d1 of the connection portion may be greater than a thickness d2 of the slit portion.

According to an aspect of the present disclosure, in the current collector, an end-side thickness d3 of the slit portion may be greater than an inner-side thickness d2 of the slit portion.

According to an aspect of the present disclosure, in the current collector, an insulator may be disposed on a lower end of the connection portion.

According to an aspect of the present disclosure, in the current collector, an insulator may be disposed on a lower end of the connection portion and a lower end of the slit portion.

According to an aspect of the present disclosure, in the current collector, the support portion and the current collecting protrusion may be formed of an identical material.

According to an aspect of the present disclosure, in the current collector, the support portion and the current collecting protrusion may be formed of different materials.

A method of manufacturing a secondary battery according to an aspect of the present disclosure may include a preparation operation, a primary welding operation, a current collector disposing operation, a bending operation, and a secondary welding operation. In the preparation operation, an electrode assembly including an electrode portion, and a plurality of foil tabs formed on one end of the electrode portion may be prepared. In the primary welding operation, the plurality of foil tabs may be grouped into at least two foil tab groups, and foil tabs of each of the foil tab groups may be welded to one another. In the current collector disposing operation, a current collector may be disposed on one end of the electrode portion such that the at least two primarily-welded foil tab groups pass through respective slits of the current collector. In the bending operation, each of the foil tab groups protruding upward from the slits of the current collector may be bent toward an upper surface of the current collector. In the secondary welding operation, the plurality of bent foil tab groups may be welded to the current collector.

According to an aspect of the present disclosure, in the bending operation, the plurality of foil tab groups protruding upward from the slits of the current collector may be bent in one direction.

According to an aspect of the present disclosure, in the current collector, a thickness d1 of the connection portion may be greater than a thickness d2 of the slit portion.

According to an aspect of the present disclosure, in the current collector, an insulator may be disposed on a lower end of the connection portion.

According to an aspect of the present disclosure, in the current collector, an insulator may be disposed on a lower end of the connection portion and a lower end of the slit portion.

According to an aspect of the present disclosure, in the current collector, the support portion and the current collecting protrusion may be formed of an identical material.

According to an aspect of the present disclosure, in the current collector, the support portion and the current collecting protrusion may be formed of different materials.

A battery module according to an aspect of the present disclosure may include the secondary battery.

A battery pack according to an aspect of the present disclosure may include the battery module.

A vehicle according to an aspect of the present disclosure may include the battery pack.

### Advantageous Effects

In a method of manufacturing a secondary battery, a secondary battery, a battery module including the same, a battery pack, and a vehicle according to embodiments of the present disclosure, an electrode assembly may be prevented from being affected when welding foil tabs and a current collector.

In a method of manufacturing a secondary battery, a secondary battery, a battery module including the same, a battery pack, and a vehicle according to embodiments of the present disclosure, wasted space in a secondary battery casing when welding a large number of foil tabs and a current collector may be minimized, and the production cost may be reduced.

In a method of manufacturing a secondary battery, a secondary battery, a battery module including the same, a battery pack, and a vehicle according to embodiments of the present disclosure, coupling of the current collector and an electrode terminal may be facilitated.

### Brief Description of Drawings

FIG. 1 is a view illustrating a secondary battery according to an embodiment of the present disclosure.
FIG. 2 is a view illustrating the secondary battery according to an embodiment of the present disclosure.
FIG. 3 is a view illustrating an electrode assembly in which a plurality of foil tabs are formed on an electrode portion, in the secondary battery according to an embodiment of the present disclosure.
FIGS. 4a and 4b are views illustrating a first electrode plate and a second electrode plate in the secondary battery according to an embodiment of the present disclosure.
FIGS. 5a and 5b are views illustrating a current collector in the secondary battery according to an embodiment of the present disclosure.
FIGS. 6a and 6b are views illustrating a current collector in the secondary battery according to another embodiment of the present disclosure.
FIGS. 7a, 7b, and 7c are views illustrating an insulator disposed under a current collector in the secondary battery according to another embodiment of the present disclosure.
FIG. 8 is a flowchart showing a method of manufacturing the secondary battery according to an embodiment of the present disclosure.
FIGS. 9a and 9b are views illustrating a plurality of foil tabs formed on an electrode portion and a side of the foil tabs in the secondary battery according to an embodiment of the present disclosure.
FIGS. 10a and 10b are views illustrating a plurality of foil tabs grouped into two or more foil tab groups in the secondary battery according to an embodiment of the present disclosure.
FIG. 11 is a view illustrating a current collector disposed on the electrode portion in the secondary battery according to an embodiment of the present disclosure.
FIGS. 12a and 12b are views illustrating a plurality of foil tab groups and the current collector welded to each other in the secondary battery according to an embodiment of the present disclosure.
FIG. 13 is a view illustrating a cover element disposed on a welded portion of the current collector and the foil tab groups in the secondary battery according to an embodiment of the present disclosure.
FIG. 14 is a view illustrating a cap assembly coupled to the electrode assembly in the secondary battery according to an embodiment of the present disclosure.

### Best Mode

Since the present disclosure may be modified in various forms, and may have various embodiments, particular embodiments will be illustrated in the accompanying drawings and described in detail with reference to the drawings. However, this is not intended to limit the present disclosure to particular modes of practice, and it is to be appreciated that all changes, equivalents, and substitutes that do not depart from the spirit and technical scope of the present disclosure are encompassed in the present disclosure.

The terminology used herein is for the purpose of describing particular embodiments only and is not intended to be limiting the present disclosure. In the present disclosure, the singular forms are intended to include the plural forms as well, unless the context clearly indicates otherwise. It will be further understood that the terms "include", "have", etc. when used in this specification, are intended to specify the presence of stated features, integers, steps, operations, elements, components, and/or combinations of them but do not preclude the presence or addition of one or more other features, integers, steps, operations, elements, components, and/or combinations thereof.

Hereinafter, exemplary embodiments of the present disclosure will be described in detail with reference to the accompanying drawings. It should be noted that like reference numerals refer to like elements throughout the attached drawings. Details of well-known configurations and functions may be omitted to avoid unnecessarily obscuring the gist of the present disclosure. For the same reason, in the accompanying drawings, some elements are enlarged, omitted, or depicted schematically.

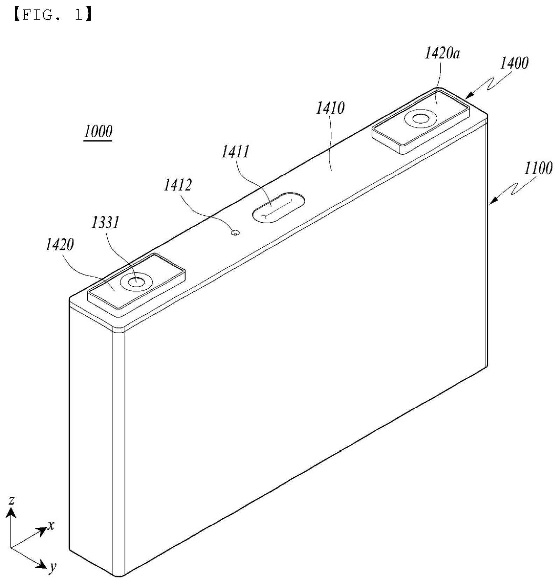

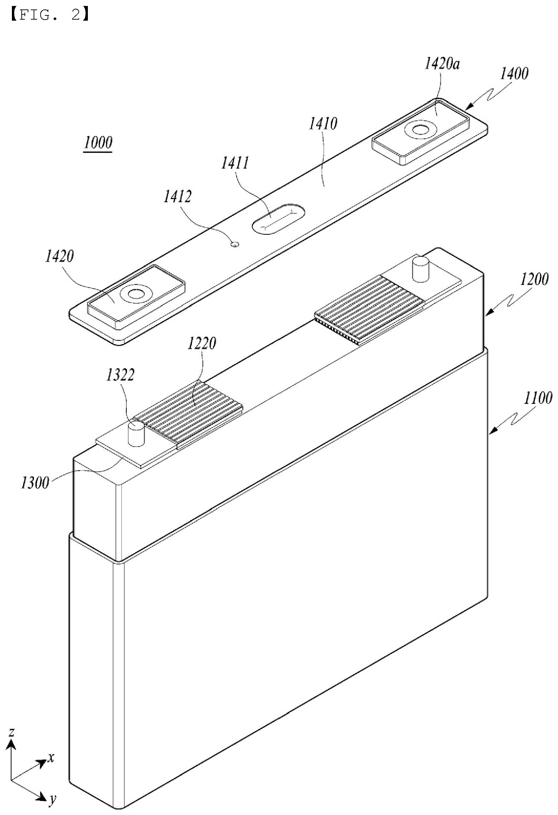

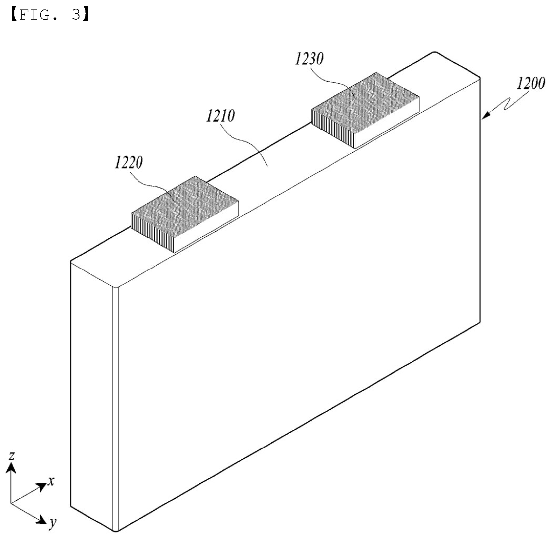

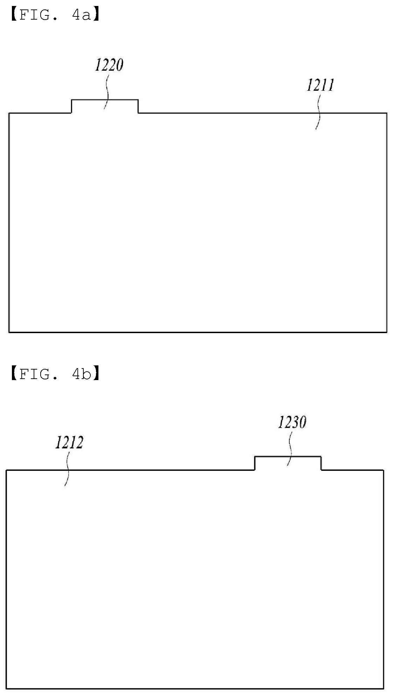

FIG. 1 is a view illustrating a secondary battery according to an embodiment of the present disclosure. FIG. 2 is a view illustrating the secondary battery according to an embodiment of the present disclosure. FIG. 3 is a view illustrating an electrode assembly in which a plurality of foil tabs are formed on an electrode portion, in the secondary battery according to an embodiment of the present disclosure. FIGS. 4a and 4b are views illustrating a first electrode plate and a second electrode plate in the secondary battery according to an embodiment of the present disclosure.

As illustrated in FIGS. 1 and 2, a secondary battery 1000 according to an embodiment of the present disclosure includes a casing 1100, an electrode assembly 1200, a current collector 1300, and a cap assembly 1400.

The casing 1100 forms an outer shape of the secondary battery 1000. The casing 1100 may define a space capable of accommodating the electrode assembly 1200 therein, and may have an opening on one surface thereof. In the present embodiment, the casing 1100 has a rectangular parallelepiped shape, but is not limited thereto and may be modified in various ways. The casing 1100 may be made of a rigid material capable of protecting the electrode assembly 1200 accommodated therein. For example, the casing 1100 may be made of metal such as aluminum or stainless steel.

Electrolyte may be received together with the electrode assembly 1200 in the casing 1100. The electrolyte may include a lithium salt such as LiPF6 or LiBF4 in an organic solvent such as ethylene carbonate (EC), propylene carbonate (PC), diethyl carbonate (DEC), ethyl methyl carbonate (EMC), or dimethyl carbonate (DMC). The electrolyte may be in a liquid, solid, or gel phase.

The electrode assembly 1200 is accommodated in the casing 1100. As illustrated in FIG. 3, the electrode assembly 1200 includes an electrode portion 1210, a plurality of first foil tabs 1220, and a plurality of second foil tabs 1230. The plurality of first foil tabs 1220 and the plurality of second foil tabs 1230 are each disposed on one end of the electrode portion 1210. The plurality of first foil tabs 1220 are aligned with one another among the first foil tabs 1220, and the plurality of second foil tabs 1230 are aligned with one another among the second foil tabs 1230. The plurality of first foil tabs 1220 and the plurality of second foil tabs 1230 are spaced apart from each other in a longitudinal direction (x-direction) of the electrode assembly 1200.

Specifically, the electrode portion 1210 includes a plurality of first electrode plates 1211, a plurality of second electrode plates 1212, and separators.

An active material may be applied to the plurality of first electrode plates 1211 and the plurality of second electrode plates 1212. The plurality of first electrode plates 1211 may each be formed by applying an active material such as a transition metal oxide to a metal plate such as an aluminum plate. The plurality of second electrode plates 1212 may each be formed by applying an active material such as graphite or carbon to a metal plate such as a copper plate or a nickel plate.

The separators are positioned between the plurality of first and second electrode plates 1211 and 1212 to prevent a short circuit between the plurality of first and second electrode plates 1211 and 1212. The separators may be made of polyethylene, polypropylene, a composite material thereof, or the like.

The electrode portion 1210 may be formed by positioning the separators 1213 between the first electrode plates 1211 and the second electrode plates 1212, which are alternately arranged. In other words, in an embodiment, the electrode portion 1210 may be formed by alternately stacking the first electrode plate 1211, the separator 1213, the second electrode plate 1212, and the separator 1213 in the listed order. In another embodiment, the electrode portion 1210 may be formed by arranging the first electrode plate 1211, the separator 1213, and the second electrode plate 1212 in the listed order, and then winding the arranged structure.

Although, in the present embodiment, the electrode assembly 1200 is illustrated as including the single electrode portion 1210, in another embodiment, the electrode assembly 1200 may include a plurality of electrode portions 1210. The plurality of electrode portions 1210 may be electrically connected to one another.

As illustrated in FIGS. 4a and 4b, foil tabs 1220 and 1230, to which no active material is applied, are respectively formed at one end of the plurality of first and second electrode plates 1211 and 1212. In an embodiment, the electrode plates 1211 and 1212 and the foil tabs 1220 and 1230 may be integrally formed by cutting a predetermined portion of a single metal plate using a laser or the like, such that the electrode plates 1211 and 1212 and the foil tabs 1220 and 1230 remain. The plurality of foil tabs 1220 and 1230 may be formed in a direction toward the cap assembly 1400.

The foil tabs 1220 of the first electrode plates 1211 overlap each other at a first position. The foil tabs 1230 of the second electrode plates 1212 overlap each other at a second position. In another embodiment, a position at which the foil tabs 1220 or 1230 of each of the first electrode plates 1211 and the second electrode plates 1212 overlap each other may be two or more. The plurality of foil tabs 1220 or 1230 that overlap each other at the same position may be coupled to each other or to the current collector by ultrasonic welding, laser welding, or the like to facilitate current flow.

The current collector 1300 includes a slit portion 1310 and a connection portion 1320. The slit portion 1310 has a rectangular shape and extends in the longitudinal direction of the electrode assembly 1200. A plurality of slits 1311 are formed in the slit portion 1310.

The connection portion 1320 has a rectangular shape and is connected to one side of the slit portion 1310. The connection portion 1320 may include a support portion 1321 and a current collecting protrusion 1322.

The structure of the current collector 1300 is described later herein.

The cap assembly 1400 seals the opening of the casing 1100 in which the electrode assembly 1200 is accommodated. The cap assembly 1400 includes a cap plate 1410 and terminals 1420 and 1420a.

The cap plate 1410 may have a plate shape that covers the opening of the casing 1100. The cap plate 1410 may have a shape corresponding to that of the opening of the casing 1100. The cap plate 1410 may be formed of the same material as the casing 1100, and may be fixed to the casing 1100 by a method such as laser welding.

The cap plate 1410 may be formed with a vent hole 1411 and an electrolyte injection hole 1412. The vent hole 1411 opens when an internal pressure of the casing 1100 exceeds a reference value. In the present embodiment, the vent hole 1411 is formed in the cap plate 1410, but in other embodiments, the vent hole 1411 may be formed in the casing 1100. Electrolyte can be injected into the casing 1100 through the electrolyte injection hole 1412.

The terminals 1420 and 1420a may be formed to protrude from the cap plate 1410. The terminals 1420 and 1420a are respectively electrically connected to the foil tabs 1220 and 1220a through the current collectors 1300. The terminals 1420 and 1420a may each have a circular or rectangular plate shape.

A through hole may be formed in each of the terminals 1420 and 1420a. Each current collecting protrusion 1322 is inserted into the corresponding through hole. After the current collecting protrusion 1322 is inserted into the through hole, an outer peripheral surface of an end of the current collecting protrusion 1322 and an inner peripheral surface of an end of the through hole may be joined by butt welding.

Insulating plates 1430 and 1430a may be positioned between the terminals 1420 and 1420a and the cap plate 1410. The insulating plates 1430 and 1430a electrically insulate the terminals 1420 and 1420a from the cap plate 1410.

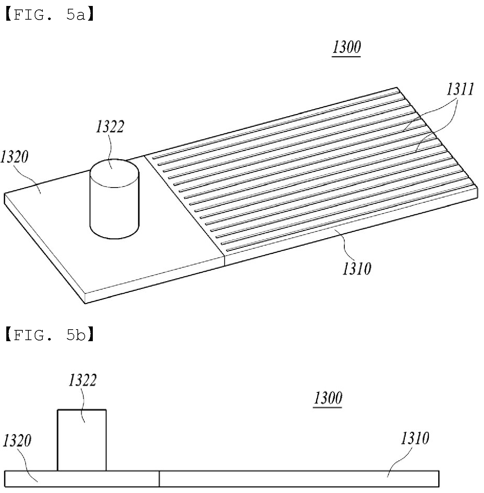

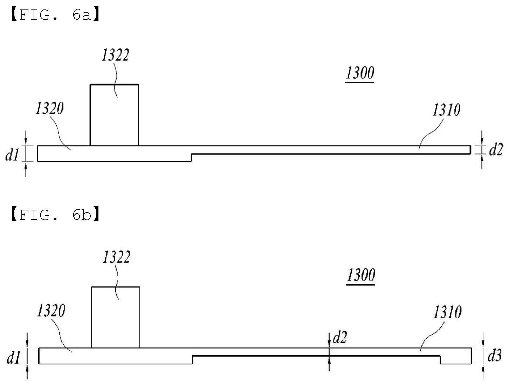

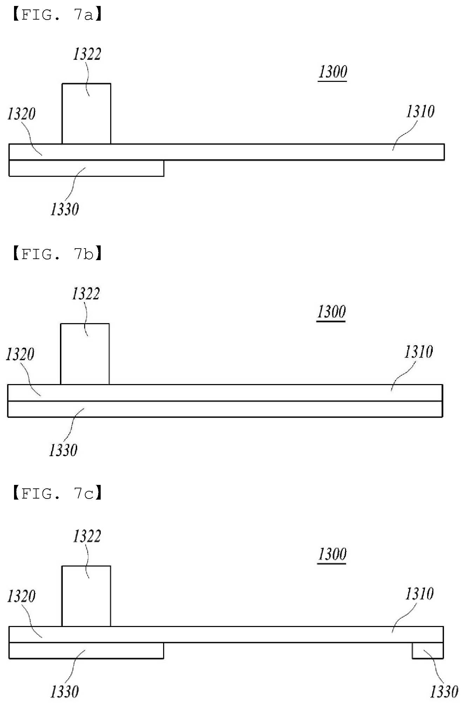

FIGS. 5a and 5b are views illustrating a current collector in the secondary battery according to an embodiment of the present disclosure. FIGS. 6a and 6b are views illustrating a current collector in the secondary battery according to another embodiment of the present disclosure. FIGS. 7a, 7b, and 7c are views illustrating an insulator disposed under a current collector in the secondary battery according to another embodiment of the present disclosure.

As illustrated in FIGS. 5a and 5b, the current collector 1300 may be formed in a rectangular plate shape. The current collector 1300 includes the slit portion 1310 and the connection portion 1320.

The slit portion 1310 has a rectangular shape with a long side in a longitudinal direction of the electrode assembly 1200. A plurality of slits 1311, which extend in the longitudinal direction of the electrode assembly 1200, are formed in the slit portion 1310. Each slit 1311 is arranged parallel in a thickness direction of the electrode assembly 1200. The foil tabs 1220 or 1230 are fitted into the slits 1311.

The connection portion 1320 has a rectangular shape and is connected to one side of the slit portion 1310. The connection portion 1320 may include the support portion 1321 and the current collecting protrusion 1322. The support portion 1321 is formed of a rectangular plate and connected to the one side of the slit portion 1310 to extend in a longitudinal direction of the electrode assembly 1200. The connection portion 1320 is disposed on a portion of the electrode portion 1210 where the foil tabs 1220 and 1230 are not formed.

The current collecting protrusion 1322 is positioned on the support portion 1321. The current collecting protrusion 1322 is connected to the through hole of the corresponding electrode terminal 1420 or 1420a to electrically connect the current collector 1300 and the electrode terminal 1420 or 1420a.

The connection portion 1320 may be integrally formed with the slit portion 1310. The connection portion 1320 and the slit portion 1310 may have the same thickness.

On the other hand, in another embodiment, as illustrated in FIG. 6a, a thickness d1 of the connection portion 1320 may be greater than a thickness d2 of the slit portion 1310. The connection portion 1320 is disposed on a portion of the electrode portion 1210 where the foil tabs 1220 and 1230 are not formed. The slit portion 1310 is disposed on a portion of the electrode portion 1210 where the foil tabs are primarily welded and aligned. When a lower surface of the slit portion 1310 is excessively close to the electrode portion 1210, the foil tabs may be damaged. Accordingly, the connection portion 1320 is formed to be thicker than the slit portion 1310 so that the slit portion 1310 is spaced apart by a predetermined distance from the upper surface of the electrode portion 1210, thereby preventing the slit portion 1310 from pressing the foil tabs 1220 or 1230. Because the slit portion 1310 is spaced apart from the electrode portion 1210 by the predetermined distance, the current collector 1300 may be stably supported on the electrode assembly 1200 and also protect the foil tabs.

Here, the slit portion 1310 and the connection portion 1320 may have the same height at upper surfaces thereof, but the connection portion 1320 may extend further downward at a lower surface thereof. A height at which the foil tabs are joined to the current collector may be secured by a thickness difference between the slit portion 1310 and the connection portion 1320.

In another embodiment, an end-side thickness d3 of the slit portion 1310 may be greater than a thickness d2 at an inner side of the slit portion 1310 (see FIG. 6b). Because the end-side thickness d3 of the slit portion 1310 is greater than other portions, a portion of the slit portion 1310 disposed on a portion where the foil tabs are formed may be spaced apart from the electrode portion 1210, and the current collector 1300 may be stably connected on the electrode portion 1210. The end-side thickness d3 of the slit portion 1310 may be equal to or less than a thickness d1 of the connection portion 1320.

As illustrated in FIGS. 7a, 7b, and 7c, an insulator 1330 may be disposed on a lower end of the connection portion 1320. The connection portion 1320 is disposed in a region where no foil tab is formed, and the insulator 1330 is disposed on a lower surface of the connection portion 1320 to prevent a short circuit with the electrode plates.

In another embodiment, the insulator may be disposed on lower surfaces of both the connection portion 1320 and the slit portion 1310 (see FIG. 7b). In still another embodiment, insulators may be disposed only at end sides of the connection portion 1320 and the slit portion 1310 (see FIG. 7c).

A width of the current collector 1300 may be 0.8 to 1 times a width of the electrode portion 1210. The current collector 1300 may have a thickness of 0.5 mm to 3.0 mm. In the present disclosure, because the foil tabs are bent onto and welded to the current collector, a sufficient thickness of the current collector can be secured.

Two current collectors 1300 may be provided. To electrically connect the electrode assembly 1200 and the electrode terminals 1420 and 1420a, a material of each current collector 1300 may be the same as that of the plurality of first foil tabs 1220, or may be the same as that of the plurality of second foil tabs 1230. That is, each of the pair of current collectors 1300 may be formed of aluminum, or may be formed of copper or nickel.

In the case of the current collector 1300 connected to the positive electrode terminal 1420, both the slit portion 1310 and the connection portion 1320 may be formed of aluminum.

In the case of the current collector 1300 connected to the negative electrode terminal 1420a, the slit portion 1310 and the connection portion 1320 may be formed of different materials. The slit portion 1310 may be formed of the same material as the second foil tabs 1230, and the current collecting protrusion 1322 may be formed of the same material as the negative electrode terminal 1420a. That is, the current collecting protrusion 1322 connected to the negative electrode terminal 1420a may be formed of an aluminum-based metal, and the slit portion 1310 connected to the foil tabs 1230 may be formed of a copper-based metal.

Here, the support portion 1321 may be formed of the same aluminum material as the current collecting protrusion 1322, or may be formed of the same copper material as the slit portion 1310. In the case where the support portion 1321 is formed of the same material as the current collecting protrusion 1322, the connection portion 1320 may be integrally formed during a forming process.

In the case where the support portion 1321 is formed of a material different from that of the current collecting protrusion 1322, the support portion 1321 and the current collecting protrusion 1322 may be coupled to each other by cold jointing. The cold jointing refers to bonding in which, by a high pressing force applied to metals, a contact area is increased due to elongation between bonding materials, thereby increasing an actual contact surface. Electrical connection having low contact resistance may be formed by cold jointing, which is material bonding in the actual contact surface.

The support portion 1321 may be formed of a Cu or Ni material and may be integrated with the slit portion 1310, and the current collecting protrusion 1322 formed of an Al material may be joined on the support portion 1321.

The pair of current collectors 1300 may be symmetrically disposed. However, the present disclosure is not limited thereto, and the current collectors may be disposed in various ways as needed.

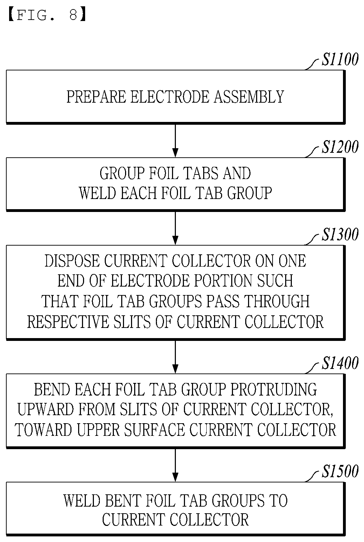

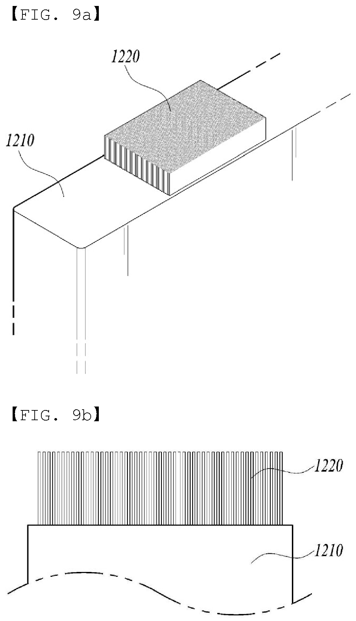

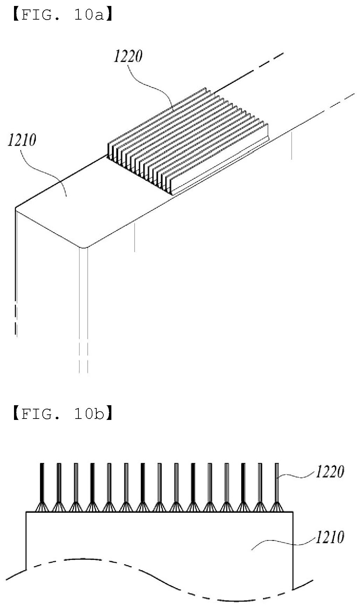

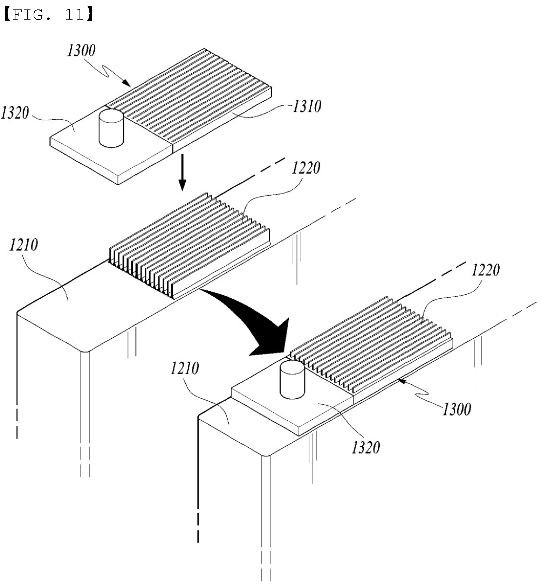

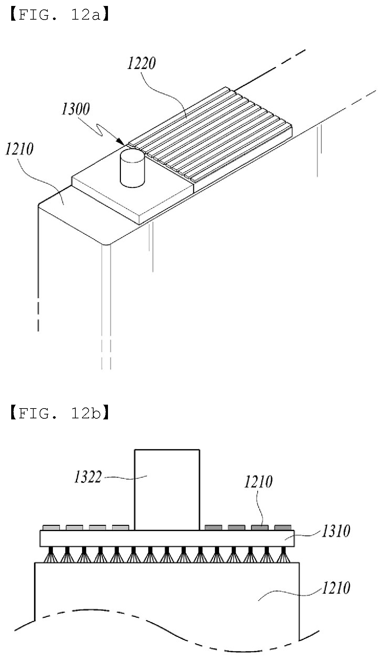

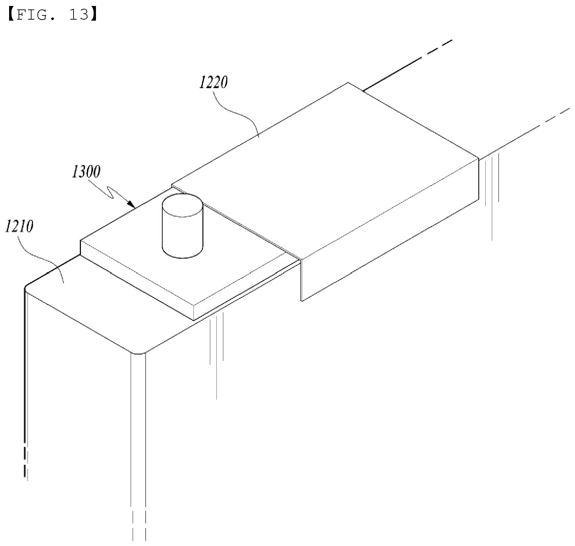

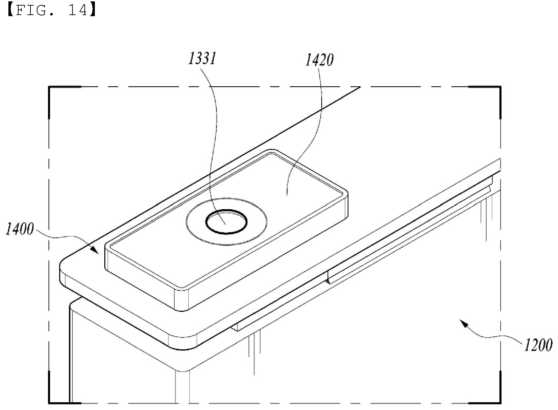

FIG. 8 is a flowchart showing a method of manufacturing the secondary battery according to an embodiment of the present disclosure. FIGS. 9a and 9b are views illustrating the plurality of foil tabs formed on the electrode portion and a side of the foil tabs in the secondary battery according to an embodiment of the present disclosure. FIGS. 10a and 10b are views illustrating the plurality of foil tabs grouped into two or more foil tab groups in the secondary battery according to an embodiment of the present disclosure. FIG. 11 is a view illustrating the current collector disposed on the electrode portion in the secondary battery according to an embodiment of the present disclosure. FIGS. 12a and 12b are views illustrating a plurality of foil tab groups and the current collector welded to each other in the secondary battery according to an embodiment of the present disclosure. FIG. 13 is a view illustrating a cover element disposed on a welded portion of the current collector and the foil tab groups in the secondary battery according to an embodiment of the present disclosure. FIG. 14 is a view illustrating the cap assembly coupled to the electrode assembly in the secondary battery according to an embodiment of the present disclosure.

As illustrated in FIG. 8, in order to manufacture the secondary battery according to an embodiment of the present disclosure, an electrode assembly is prepared (S1100). The electrode assembly 1200 includes the electrode portion 1210, the plurality of first foil tabs 1220 and the plurality of second foil tabs 1230 that are formed on one end of the electrode portion 1210. The electrode portion 1210 includes a plurality of unit electrode plates on which an active material is applied and separators that prevent a short circuit between the plurality of unit electrode plates. The foil tabs are formed at one end of the plurality of unit electrode plates and are not coated with an active material.

The electrode portion may be formed by positioning the separators between the unit electrode plates that are alternately arranged. In an embodiment, the electrode portion may be formed by alternately stacking the unit electrode plates and the separators in an order of the unit electrode plate, the separator, and the unit electrode plate. In another embodiment, the electrode portion may be formed by arranging the unit electrode plate, the separator, and the unit electrode plate in the listed order and then winding the arranged structure.

The plurality of first foil tabs 1220 and the plurality of second foil tabs 1230 are disposed on the one end of the electrode portion 1210. When the plurality of electrode plates forming the electrode portion are stacked, the plurality of first foil tabs 1220 overlap one another at a first position, and the plurality of second foil tabs 1230 overlap one another at a second position. In other words, the plurality of first foil tabs 1220 are grouped at the first position, and the plurality of second foil tabs 1230 are grouped at the second position. The plurality of first foil tabs 1220 are aligned with each other among the first foil tabs 1220, and the plurality of second foil tabs 1230 are aligned with each other among the second foil tabs 1230.

Next, the plurality of foil tabs are grouped into at least two foil tab groups and welded to one another within each foil tab group (S1200). The plurality of first foil tabs 1220 may be disposed on one side of the electrode assembly 1200, and the plurality of second foil tabs 1230 may be disposed on a remaining side of the electrode assembly 1200. The plurality of first foil tabs 1220 are collected in units of several to tens to form two or more foil tab groups. For example, each foil tab group may include at least five or more foil tabs. The foil tabs within each foil tab group of the plurality of first foil tabs 1220 are primarily welded to one another.

Likewise, the plurality of second foil tabs 1230 are collected in units of several to tens to form two or more foil tab groups. For example, each foil tab group may include at least five or more foil tabs. The foil tabs within each foil tab group of the plurality of second foil tabs 1230 are primarily welded to one another.

The current collector 1300 is disposed on the upper surface of the electrode portion 1210 (S1300). The connection portion 1320 of the current collector 1300 may be disposed on a portion of the electrode portion 1210 where no foil tab is formed. The slit portion 1310 of the current collector 1300 is positioned on the plurality of foil tab groups that are primarily welded on the electrode portion 1210. The current collector 1300 is positioned such that the primarily welded foil tab groups pass through the respective slits 1311. When the current collector 1300 is seated on the electrode portion 1210, the plurality of foil tab groups are fitted into the slits 1311.

The foil tab groups protruding upward from the slits 1311 of the current collector 1300 are each bent toward an upper surface of the current collector 1300 (S1400). After the plurality of first foil tab groups are inserted into the plurality of slits 1311 formed in the slit portion 1310, the plurality of foil tab groups protruding upward from the slits 1311 are each bent toward the upper surface of the slit portion 1310. For uniform welding, the plurality of foil tab groups may be bent in one direction, that is, all in the same direction.

In the present disclosure, because the foil tabs are welded directly onto the current collector after passing through the slits without being bent, it is not necessary for the foil tabs to be formed relatively long. Accordingly, the present disclosure may reduce the production cost. In addition, because no space for bending the foil tabs is required, the capacity of the secondary battery may be increased.

Furthermore, in the present disclosure, because the foil tabs 1220 and 1230 are placed on the current collector 1300 and welding is performed from the upper side of the foil tabs, there is no risk of damaging separators provided in the electrode portion 1210. In the case where the current collector 1300 is welded to upper portions of the foil tabs 1220 and 1230, the current collector is required to be relatively thin in order to transmit heat to the foil tabs located under the current collector, which leads to deterioration in durability. However, in the present disclosure, because the plurality of foil tabs are bent onto and welded to the current collector, a sufficient thickness of the current collector can be secured, and the foil tabs may be more efficiently welded to the current collector.

The plurality of bent foil tab groups and the current collector 1300 are welded (S1500).

The welding may be performed from the upper side of the foil tab groups. A method such as ultrasonic welding or laser welding may be used for the welding.

As illustrated in FIG. 13, in an embodiment, after the welding of the plurality of foil tabs is completed, a cover element 1360 may be disposed on the welded portion, that is, on the slit portion 1310. The cover element 1360 may cover at least portions of the electrode assembly 1200 and the current collector 1300.

The cover element 1360 may include an insulating material. The cover element 1360 may be an insulating tape. The support portion 1321 and the current collecting protrusion 1322 may be exposed without being covered by the cover element 1360. Each of the terminals 1420 and 1420a may be coupled to the corresponding current collecting protrusion 1322. Because the welded portion is covered with the cover element 1360, an insulating structure of the cover plate 1400 may be further simplified.

The electrode assembly 1200 to which the current collector 1300 is welded is accommodated in the casing 1100. The cap assembly 1400 seals the opening of the casing 1100. As illustrated in FIG. 14, after the current collecting protrusion 1322 is inserted into the through hole of the terminal 1420 of the cap assembly 1400, the outer circumferential surface of the end of the current collecting protrusion 1322 may be welded to the inner circumferential surface of the end of the through hole.

In the case where the current collector is welded to upper portions of the foil tabs, the current collector is required to be relatively thin to transmit heat to the foil tabs located under the current collector, thus leading to deterioration in the durability of the secondary battery. However, in the present disclosure, because the plurality of foil tabs are welded on the current collector, a sufficient thickness of the current collector can be secured, and the foil tabs may be more efficiently welded to the current collector.

A battery module may be configured by including a plurality of secondary batteries according to an embodiment of the preset disclosure. The plurality of secondary batteries may be connected to each other by a bus bar or the like to configure the battery module. In addition, a battery pack may be configured by including a plurality of battery modules. The battery pack may be configured by disposing the plurality of battery modules in an upper pack housing and a lower pack housing constituting a pack housing. In addition, the battery pack may be provided in a vehicle that transports or moves loads or people, or that moves while performing operations. Such a vehicle may include bicycles, heavy equipment, agricultural and fishery equipment, automobiles, buses, and airplanes. Here, the automobile may be an electric vehicle, a hybrid vehicle, or a plug-in hybrid vehicle. The automobile may include a four-wheel automobile or a two-wheel automobile. The vehicle may operate by receiving power from the battery pack.

While the present disclosure has been described with respect to the specific embodiments, it will be apparent to those skilled in the art that various changes or modifications of the present disclosure are possible by adding, changing, or deleting components without departing from the spirit of the present disclosure as defined in the following claims. It should be noted that these changes or modifications also fall within the scope of the present disclosure.

## Claims

1. A secondary battery, comprising:
an electrode assembly including an electrode portion, and a plurality of foil tabs formed on one end of the electrode portion; and
a current collector including a slit portion formed with a plurality of slits extending in a longitudinal direction of the electrode assembly, and a connection portion connected to one side of the slit portion and provided with a support portion and a current collecting protrusion, the current collector being disposed on an upper side of the electrode portion and welded to the plurality of foil tabs,
wherein the plurality of foil tabs are grouped into at least two foil tab groups, and the foil tab groups pass through the respective slits of the current collector.

2. The secondary battery of claim 1, wherein each of the plurality of foil tab groups is primarily welded.

3. The secondary battery of claim 1, wherein the plurality of foil tab groups protruding upward from the slits of the current collector are each bent toward an upper surface of the current collector.

4. The secondary battery of claim 1, wherein each of the foil tab groups includes at least five foil tabs.

5. The secondary battery of claim 1, wherein in the current collector, a thickness of the connection portion is identical to a thickness of the slit portion.

6. The secondary battery of claim 1, wherein in the current collector, a thickness d1 of the connection portion is greater than a thickness d2 of the slit portion.

7. The secondary battery of claim 1, wherein in the current collector, an end-side thickness d3 of the slit portion is greater than an inner-side thickness d2 of the slit portion.

8. The secondary battery of claim 1, wherein in the current collector, an insulator is disposed on a lower end of the connection portion.

9. The secondary battery of claim 1, wherein in the current collector, an insulator is disposed on a lower end of the connection portion and a lower end of the slit portion.

10. The secondary battery of claim 1, wherein in the current collector, the support portion and the current collecting protrusion are formed of an identical material.

11. The secondary battery of claim 1, wherein in the current collector, the support portion and the current collecting protrusion are formed of different materials.

12. A method of manufacturing a secondary battery, comprising:
a preparation operation of preparing an electrode assembly including an electrode portion, and a plurality of foil tabs formed on one end of the electrode portion;
a primary welding operation of grouping the plurality of foil tabs into at least two foil tab groups and welding foil tabs of each of the foil tab groups to one another;
a current collector disposing operation of disposing a current collector on one end of the electrode portion such that the at least two primarily-welded foil tab groups pass through respective slits of the current collector;
a bending operation of bending each of the foil tab groups protruding upward from the slits of the current collector, toward an upper surface of the current collector; and
a secondary welding operation of welding the plurality of bent foil tab groups to the current collector.

13. The method of claim 12, wherein in the bending operation, the plurality of foil tab groups protruding upward from the slits of the current collector are bent in one direction.

14. The method of claim 12, wherein in the current collector, a thickness d1 of the connection portion is greater than a thickness d2 of the slit portion.

15. The method of claim 12, wherein in the current collector, an insulator is disposed on a lower end of the connection portion.

16. The method of claim 12, wherein an insulator is disposed on a lower end of the connection portion and a lower end of the slit portion.

17. The method of claim 12, wherein in the current collector, the support portion and the current collecting protrusion are formed of an identical material.

18. The method of claim 12, wherein in the current collector, the support portion and the current collecting protrusion are formed of different materials.

19. A battery module comprising the secondary battery according to any one of claims 1 to 11.

20. A battery pack comprising the battery module according to claim 19.

21. A vehicle comprising the battery pack according to claim 20.
